# EUROPEAN PATENT SPECIFICATION

(11) **EP 0 233 355 B1**
(45) Date of publication and mention of the grant of the patent: **10.02.1993**
(21) Application number: 86117564.4
(22) Date of filing: 17.12.1986
(51) Int. Cl.: C09J 185/00, C09D 185/00, B32B 17/10, B32B 27/04

(54) **Coated or laminated comosites**
Angestrichenes oder kaschiertes Material
Composites badigeonnés ou laminés

(30) Priority: 23.12.1985 US 812666
(43) Date of publication of application: 26.08.1987
(73) Proprietor: PPG INDUSTRIES, INC., Pittsburgh Pennsylvania 15272 (US)
(72) Inventor: Lin, Chia-Cheng, Gibsonia, Pa.15044 (US); Rukavina, Thomas George, Gibsonia, Pa.15044 (US)
(74) Representative: Sternagel, Hans-Günther, Dr.

(56) References cited:
- GB-A- 728 751
- GB-A- 2 068 397
- US-A- 4 396 650
- CHEMICAL ABSTRACTS, vol. 100, 1984, page 583, abstract no. 77401x, Columbus, Ohio, US; & JP-A-57 178 796 (DAINIPPON PRINTING CO., LTD) 04-11-1982
- CHEMICAL ABSTRACTS, vol. 87, 1977, page 56, abstract no. 7130x, Columbus, Ohio, US; & JP-A-77 32 030 (TOSHIBA SILICONE CO., LTD) 10-03-1977
- ENCYCLOPEDIA OF POLYMER SCIENCE AND TECHNOLOGY, vol. 12, Interscience 1964, pages 494-495,565,566, New York, US; H.F. MARK et al.: "Titanosiloxanes"
- CHEMICAL ABSTRACTS, vol. 97, 1982, page 638, abstract no. 136682j, Columbus, Ohio, US; & JP-A-82 08 522 (HITACHI LTD) 16-01-1982
- CHEMICAL ABSTRACTS, vol. 87, 1977, page 24, abstract no. 53910z, Columbus, Ohio, US; V.V. KRIVONISHCHENKO et al.: "Thermal stability of some chelate titanosiloxane oligomers", & VYSOKOMOL. SOEDIN., SER. B 1977, 19(5), 382-6

## Description

The present invention relates to a laminated product and to a coated product both of which products comprising a primer comprising titanate/organosilane copolymer. GB-A-728,751 discloses a process for the preparation of a copolymer wherein a mixture of a titanic acid ester, preferably tetra-n-butyl-titanate or tetra-n-butylamide, and an alkoxy silane, preferably di-n-butyldi-n-butoxysilane or tetra-n-butoxysilane is reacted with a proportion of water insufficient to hydrolyse of all the hydrolysable organic groups in solution of a low boiling organic solvent such as an alcohol or an aliphatic or aromatic hydrocarbon. Additionally this document discloses a process for conferring water-repellant properties on fibers, filaments and fabrics in which the materials are treated with an anhydrous solvent solution containing 1-10 % of the above copolymers, the solvent is removed and the treated materials are exposed to the action of moisture.

GB-A-2 068 397 discloses a silicone composition comprising an organosilicon compound containing at least one silicon-bonded alkoxy radical per molecule, an organotitanate, and an organohydrogensilicon compound containing at least one SiH group per molecule, and optionally an organic solvent being useful for the adhesion between silicone rubber and a substrate.

US-A-3,321,359 discloses that adhesion of a cured polysiloxane onto a solid material, e.g. aluminium is improved,if a primer containing an organosilane and a hydrolysable titanium compound, is first applied.

US-A-3,794,556 teaches, that a primer composition comprising a mixture of a tetraalkoxysilane or a hydrolysate thereof, and a tetraalkyl titanate can be used to adhesion of silicone elastomers to titanium substrates and to polymerized substrates, such as cured surfaces and polyurethanes.

The present invention relates to the art of altering the surface properties of substrates, and more particularly to the art of primers which increase the adherence of various materials to glass, plastic, metal or oxide surface substrates.

The object of the present invention is to provide a multilayer product bond together by a primer comprising a titanate / organosilane copolymer. The first embodiment of the present invention provides such a product by bonding using a primer, a rigid polymer as substrate and an elastomer interlayer, which is a vinyl polymer.

Another embodiment of the present invention provides a coated product by bonding via a primer, a rigid organic polymeric substrate and an inorganic coating.

Thus, provided is a laminated product comprising:
a. a rigid polymeric substrate;
b. an elastomeric interlayer adhered to said substrate; and
c. between said polymeric substrate and said elastomeric interlayer, a primer comprising titanate/organosilane copolymer,
**characterized in**
that said interlayer is a vinyl polymer.

Preferably, said rigid polymeric substrate is selected from the group consisting of polyacrylates and polycarbonates.

Preferably, said primer is a reaction product of titanium (IV) butoxide and methacryloxypropyltrimethoxysilane.

Additionally, provided is a coated product comprising:
a. a rigid organic polymeric substrate;
b. an inorganic coating on said substrate; and
c. between said substrate and said coating a primer comprising a titanate/organosilane copolymer.

The present invention provides titanate/organosilane polymers which can be effective to promote adhesion of coatings to substrates depending on the nature of the organic moiety of the polymer. Titanate/organosilane primers of the present invention are useful in promoting adhesion of an organic film, e.g. a vinyl interlayer, to such surfaces as stretched acrylic or a metal oxide coated stretched acrylic substrate.

The compositions used in accordance with the present invention comprise both titanate and organosilane moieties. A titanate/organosilane primer used in accordance with the present invention may be formulated simply by dissolving or partially hydrolyzing appropriate titanate and organosilane compounds, preferably titanium tetraalkoxides and trialkoxyorganosilanes, in a suitable solvent. Organic solvents such as alcohols are preferred, particularly isopropanol.

A preferred primer used in accordance with the present invention comprises tetrabutyl titanate and trialkoxyorganosilane dissolved in 2-propanol. An equimolar mixture of tetrabutyl titanate and trialkoxy organosilane dissolved in 2-propanol at a concentration of about one half to one percent is a particularly preferred primer.

A solution of titanate/organosilane primer used in accordance with the present invention may be applied to a substrate surface by any convenient means such as dipping or spraying. Flow coating is a preferred method of application. The primer of the present invention may be applied at ambient temperature. The solvent may be evaporated at ambient temperature, or evaporation may be accelerated by heating. However, heat curing of the titanate/organosilane primer of the present invention is not necessary.

The preparation of titanate/organosilane polymers used in the present invention is based on the following reaction sequence. First, the trialkoxyorganosilane is hydrolyzed.

RₓSi(OR')₄₋ₓ + H₂0 → RₓSi(OR')₄₋ₓ₋₁OH + R'OH

Then the hydrolyzed organosilane reacts with the tetraalkoxy titanium compound.

RₓSi(OR')₄₋ₓ₋₁OH + Ti(OR'')₄ → RₓSi(OR')₄₋ₓ₋₁ OTi(OR'')₃ + R''OH

The organic moiety R can be any of a wide range of organic groups, depending on the desired properties of the composition. The number of organic moieties R may be from 1 to 3, again depending on the desired properties. R' is preferably methyl or ethyl, but may be propyl, butyl or higher homologs if the reaction is acid catalyzed. R'' is preferably butyl.

In a most preferred embodiment of the present invention, the mole ratio of silane to water is about one and the mole ratio of silane to titanate is also about one. The most preferred titanate is tetrabutyl titanate, and preferred silanes are trimethoxy and triethoxy organosilanes. The reactions are preferably catalyzed with inorganic acids such as hydrochloric or nitric acid.

The present invention will be further understood from the description of specific examples which follow.

### EXAMPLE I

A titanate/organosilane composition was prepared by hydrolyzing 24.84 grams of methacryloxypropyltrimethoxysilane in 100 grams of 2-propanol containing 1.8 grams of water. The solution was heated to and held for 15 minutes at 50°C. Then 28.4 grams of tetrabutyltitanate was added, and the reaction mixture maintained at 50°C for an additional 20 minutes. The clear solution of titanate/organosilane thus formed is useful as a primer in aircraft transparencies because the methacryloxypropyl organic moiety promotes adhesion of coatings to an acrylic substrate surface.

### EXAMPLE II

A primer composition was prepared by mixing together 12.42 grams of methacryloxypropyltrimethoxysilane and 13.61 grams of tetrabutyltitanate in 200 grams of 2-propanol containing 1.35 grams of water for 15 minutes. The primer solution thus prepared was used as follows. Clear float glass samples were cleaned, and one surface of each coated with the primer. A clear vinyl interlayer was assembled between the primed glass surfaces. The assembly was vacuum sealed in a bag and placed in an autoclave at about 135°C. (275°F.). The primer improves adhesion between the glass and the vinyl.

The above examples are offered only to illustrate the present invention. Various other organosilane and titanate compounds such as titanium isopropoxide may be hydrolyzed and reacted in various concentrations and solvents to form titanate/organosilane primers in accordance with the present invention. The primers of the present invention may be used to enhance adhesion of a variety of materials in addition to acrylic substrates, vinyl interlayers and metal oxide films, such as polycarbonates, polysilicates and polysiloxanes.

## Claims

1. A laminated product comprising:
a. a rigid polymeric substrate;
b. an elastomeric interlayer adhered to said substrate; and
c. between said polymeric substrate and said elastomeric interlayer, a primer comprising titanate/organosilane copolymer,
**characterized in**
that said interlayer is a vinyl polymer.

2. A laminated product according to claim 1, wherein said rigid polymeric substrate is selected from the group consisting of polyacrylates and polycarbonates.

3. A laminated product according to claim 1, wherein said primer is a reaction product of titanium (IV) butoxide and methacryloxypropyltrimethoxysilane.

4. A coated product comprising:
a. a rigid organic polymeric substrate;
b. an inorganic coating on said substrate; and
c. between said substrate and said coating a primer comprising a titanate/organosilane copolymer.

## Patentansprüche

1. Laminiertes Produkt, enthaltend
a. einen harten polymeren Träger,
b. eine an dem Träger haftende elastomere Zwischenschicht und
c. eine Titanat/Organosilancopolymer enthaltende Grundierung zwischen dem polymeren Träger und der elastomeren Zwischenschicht,
**dadurch gekennzeichnet**,
daß die Zwischenschicht ein Vinylpolymer ist.

2. Laminiertes Produkt nach Anspruch 1,
**dadurch gekennzeichnet**,
daß der harte polymere Träger aus der aus Polyacrylaten und Polycarbonaten bestehenden Gruppe ausgewählt ist.

3. Laminiertes Produkt nach Anspruch 1,
**dadurch gekennzeichnet**,
daß die Grundierung ein Reaktionsprodukt von Titan (IV) - Butoxid und Methacryloxypropyltrimethoxysilan ist.

4. Beschichtetes Produkt, enthaltend
a. einen harten organischen, polymeren Träger,
b. eine anorganische Beschichtung auf dem Träger und
c. eine Titanat/Oganosilancopolymer enthaltende Grundierung zwischen dem Träger und der Beschichtung.

## Revendications

1. Stratifié comprenant :
a. un substrat polymère rigide;
b. une couche intermédiaire élastomère adhérant audit substrat; et
c. entre ledit substrat polymère et ladite couche intermédiaire élastomère, un apprêt comprenant un copolymère titanate/organosilane,
caractérisé en ce que ladite couche intermédiaire est un polymère vinylique.

2. Stratifié selon la revendication 1, dans lequel ledit substrat polymère rigide est choisi dans le groupe consistant en polyacrylates et polycarbonates.

3. Stratifié selon la revendication 1, dans lequel ledit apprêt est un produit de la réaction de butoxyde de titane (IV) et de methacryloxypropyltriméthoxysilane.

4. Produit revêtu comprenant :
a. un substrat polymère organique rigide;
b. un revêtement inorganique sur ledit substrat; et
c. entre ledit substrat et ledit revêtement un apprêt comprenant un copolymère titanate/organosilane.
